# EUROPEAN PATENT APPLICATION

(11) **EP 4 588 623 A1**
(43) Date of publication of application: **23.07.2025**
(21) Application number: 24153072.4
(22) Date of filing: 22.01.2024
(51) Int. Cl.: B25J 5/02, B25J 15/00, B65G 1/04, B65G 47/90

(54) **A ROBOT**

(71) Applicant: AUTOSTORE TECHNOLOGY AS, 5578 Nedre Vats (NO)
(72) Inventor: AUSTRHEIM, Trond, 5578 Nedre Vats (NO)
(74) Representative: Kilburn & Strode LLP

(57) **Abstract**

The disclosure relates to a robot comprising a body portion and a gripping device having a locking mechanism, the robot being arranged to ride on a grid of rails and to raise and lower the gripping device relative to the body portion, the gripping device being arranged to releasably grip a container, the locking mechanism being arranged to releasably lock onto a container lid.

## Description

### TECHNICAL FIELD

The disclosure relates to a robot. More particularly, it relates to a robot comprising a body portion and a gripping device having a locking mechanism and a method of operating the robot.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system having a grid of rails is arranged on top of the grid, along which robotic container-handling vehicles configured to lift containers from the grid can travel/ride. The container-handling vehicles are configured to transport containers from the grid and to deliver them to ports or stations at the periphery of the grid so that the goods within the container can be picked and packed.

Goods stored within bins may be sensitive to contamination - as could occur when an open bin containing foodstuffs/medicine has a second bin stacked on top on it and the base of the second bin has previously been placed on the warehouse floor or when dirt/debris/water from the warehouse environment fall into such an open bin.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 is a perspective view of a container with a lid;
Fig. 6 is a cut-away perspective view of the container and lid of Fig. 5;
Fig. 7 is a perspective view of at least a portion of a griping device;
Fig. 8 is a cut-away perspective view of robotic vehicle carrying, in a first configuration, a container with a lid;
Fig. 9 is a cut-away perspective view of robotic vehicle carrying, in a second configuration, a container with a lid;
Fig. 10 is a perspective view of robotic vehicle showing, from below, its gripping device and locking mechanism;
Fig. 11 shows a flow chart of method steps that may be performed according to the present disclosure; and
Fig. 12 shows a flow chart of method steps that may be performed according to the present disclosure.

### DETAILED DESCRIPTION

In overview, the disclosure relates to a robot that can ride on a grid of rails of a storage system and raise and lower a gripping device that is able to independently pick up a container and lock onto a container lid. By having a lid locking ability in a gripping device that is also used to pick up containers, the robot can remove lids from containers and so there is no need to slow things down by removing lids when containers are at an egress port of the storage system (or to create a specialised lid removing robot).

### Automated storage and retrieval system overview

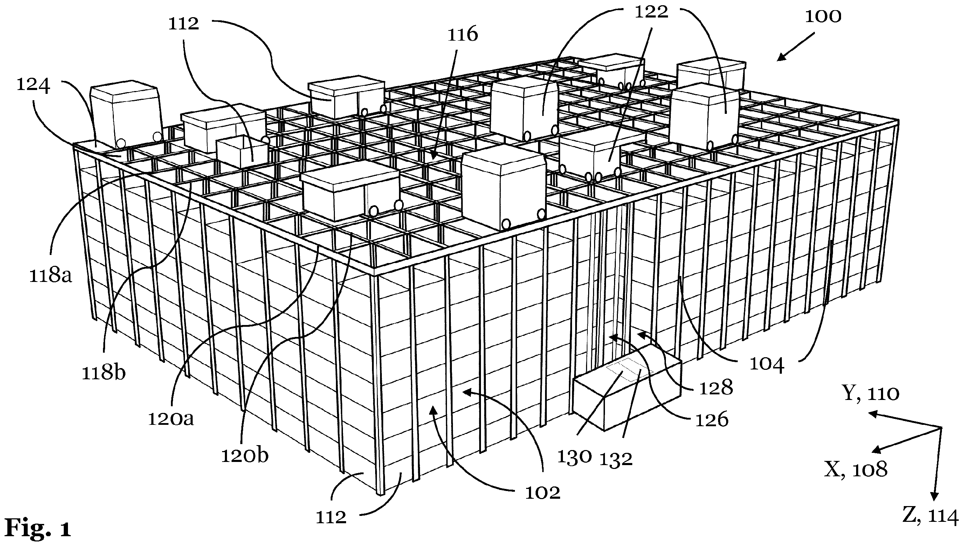

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 (which may be a grid of rails) and to transport bins 112 in both the X and Y directions 108, 110. The robots 122 are additionally configured to lift and lower bins 112 from/into the columns 102 in the Z direction 114 by way of one or more bands, wires, ropes etc., the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

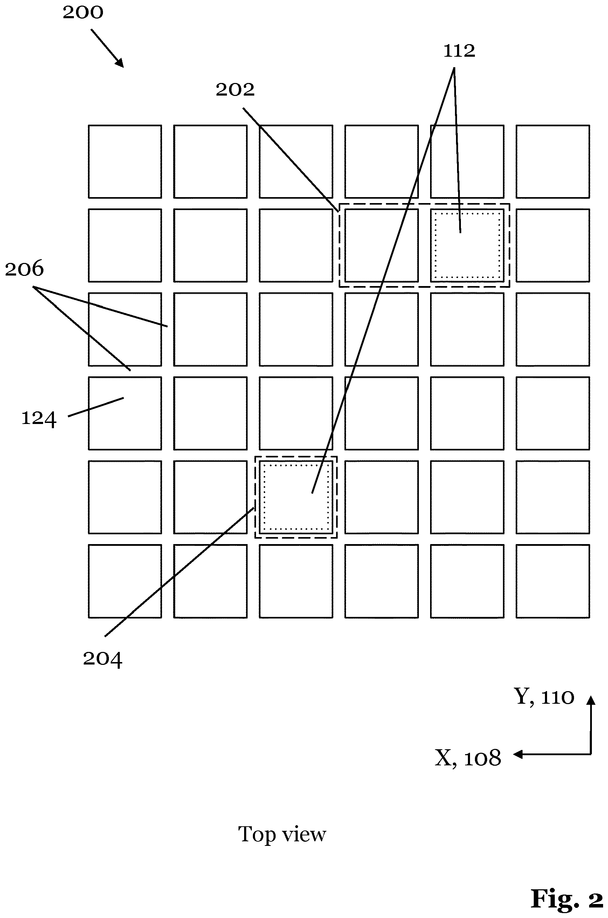

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

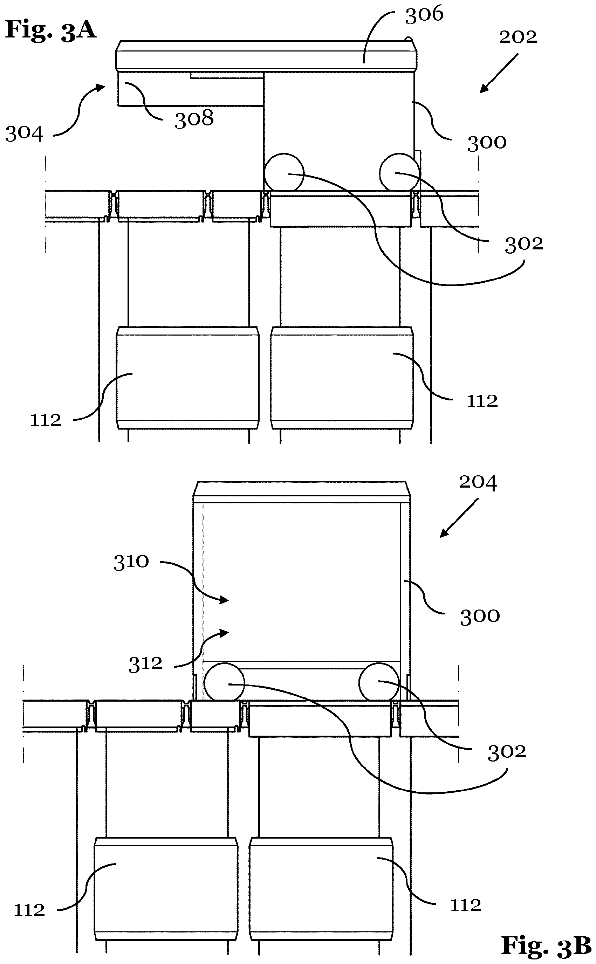

A first, 'cantilever' type of robot 202 is shown in more detail in Fig. 3A and includes a body (or body portion) 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306 - for example by way or one or more bands, wires, ropes etc. The gripping device 308 is configured to releasably grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

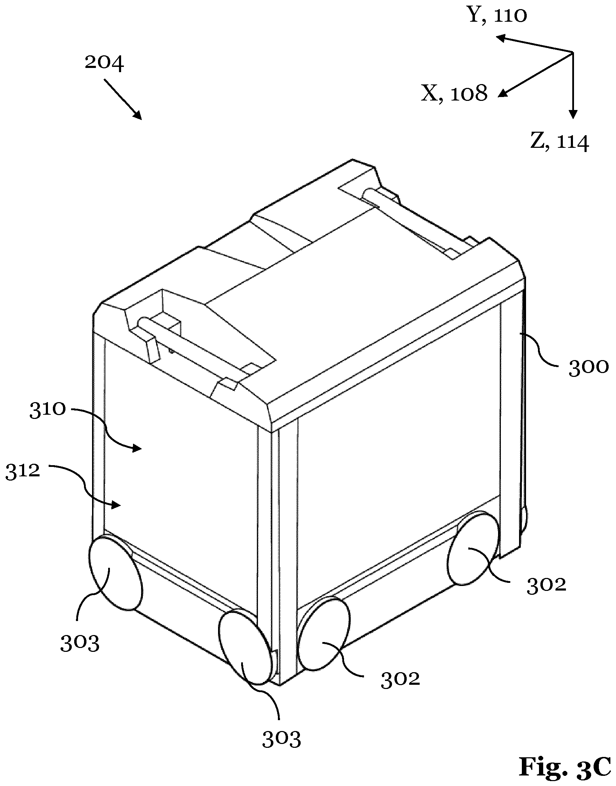

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

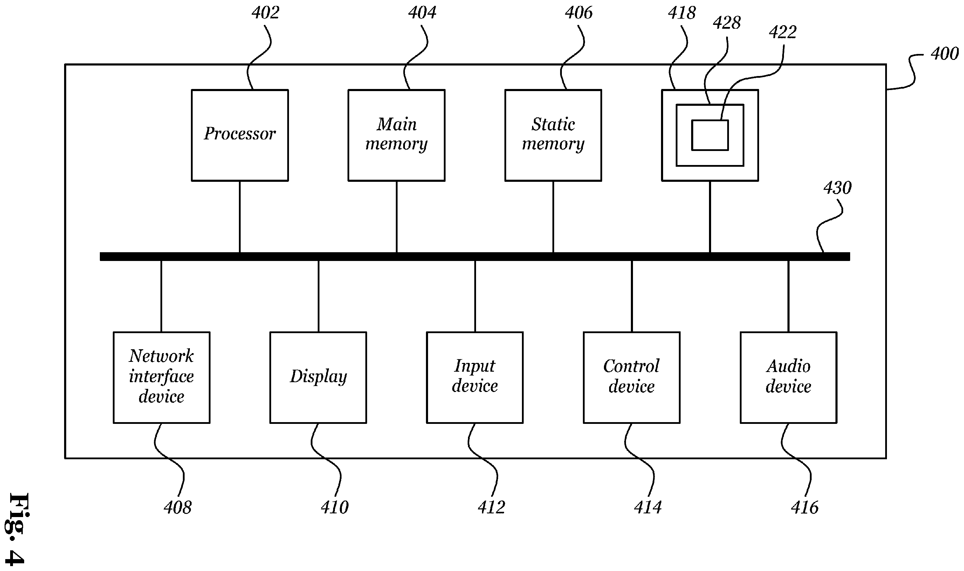

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Container and lid

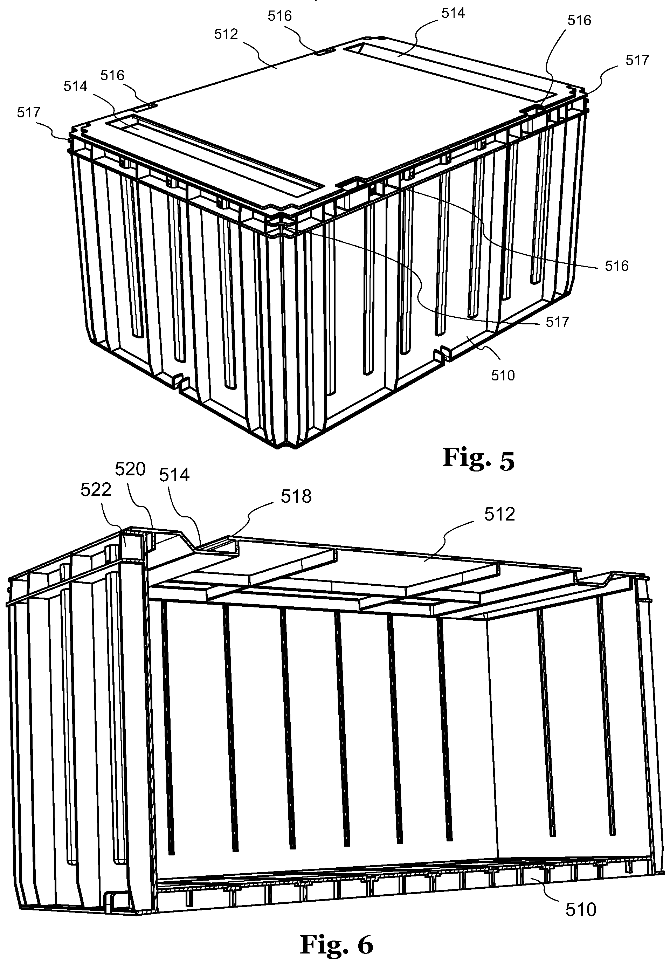

Fig. 5 shows a perspective view of a container (or bin) 510 with a lid 512. In this instance, the lid 512 has a plurality of recesses 514 for engagement with a locking mechanism of the gripping device of the robotic vehicle. Although recesses are shown in Fig. 5, any other one or more features that enable the locking mechanism to releasably lock onto the lid 512 could also be employed. However, by employing recesses, the z-direction projection of the lid 512 is beneficially kept low - thereby avoiding the lid 510 unnecessarily increasing both the height of any stack of such containers 510 with lids 512 and the associated storage system. The lid also has a plurality of cut outs 516 to enable one or more portions of the gripping device to pass beyond the lid 512 in order to to grip the container 510. The container 510 may have one or more guide portions 517 for guiding the gripping device as it is lowered to ensure it is correctly located for gripping the container 510. Fig. 6 shows a cut-away perspective view of the container and lid of Fig. 5. As can be seen in Fig. 6, the recess 514 has a lip or projection 518 configured to engage with a respective corresponding feature of the locking mechanism. The lid 512 also has a peripheral lip 520 for engagement with a sidewall 522 on the container 510 for locating the lid 512 on the container 510.

### Robot and gripping device

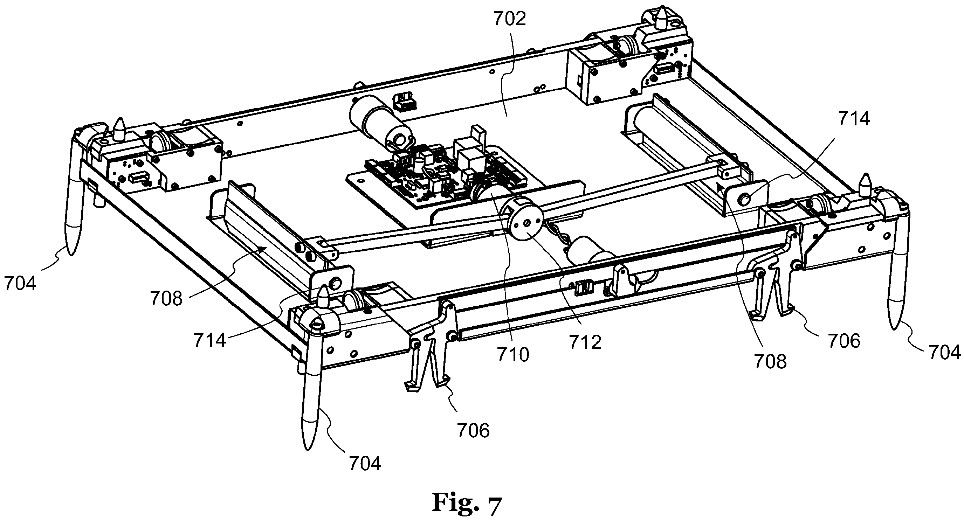

Fig. 7 is a perspective view of at least a portion of a griping device 702 which may be the gripping device 308 of Fig. 3A. The gripping device 702 may comprise a plurality of guides 704 (in this case guide pins) for interacting with guide portions 517 of a container 510 as the gripping device 702 is lowered onto the container to guide the gripping device 702 into position for gripping the container 510. The gripping device further comprises one or more grips 706 for releasably gripping the container. The gripping device 702 further comprises a locking mechanism arranged to releasably lock onto a container lid such as the container lid 512 of Fig. 5. In this instance, the locking mechanism comprises a pair of locking members 708 arranged to each move from a respective projecting position to a respective retracted position respectively for: locking the lid 512 onto the locking mechanism and consequently also the gripping device 702, and releasing the lid 512 therefrom. In this instance, the locking members 708 can be moved between their respective projecting and retracted positions by way of a motor 710 driving a rotary crank 712 mechanically coupled to the locking members 708 to cause their rotation about respective rotation points (or axes) 714. The locking mechanism of griping device 702 is arranged to operate independently of the grips 706 so that gripping and releasing of containers may be performed independently of the locking and releasing of lids.

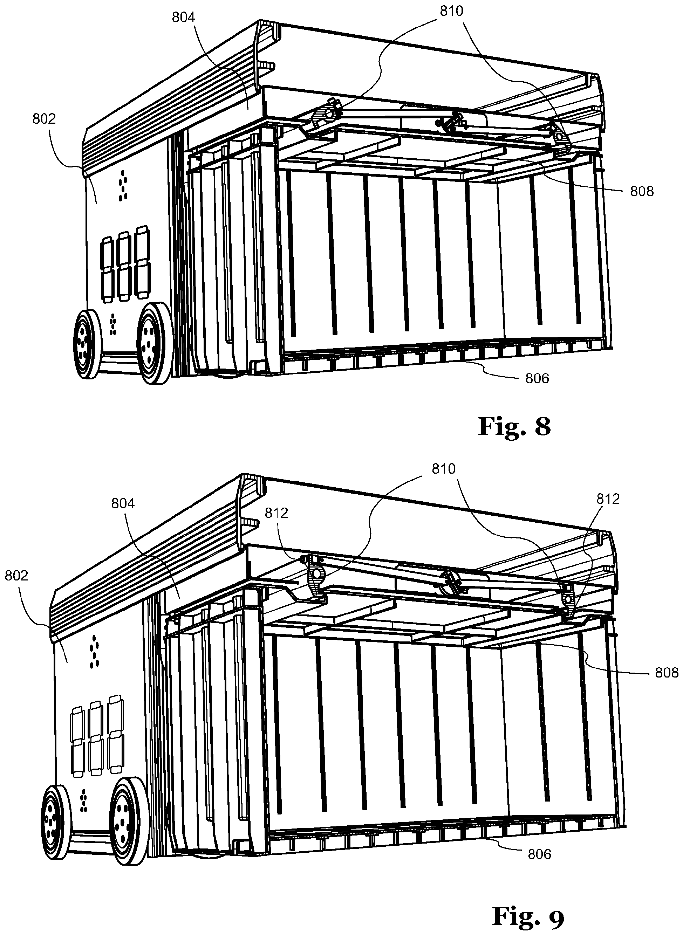

Fig. 8 is a cut-away perspective view of robot 802 (which may be the robot 202 of Fig. 3A or the robot 204 of Fig. 3B) having a gripping device 804 gripping a container 806 (which may be the container 510 of Fig. 5). In the configuration of Fig. 8, a container lid 808 (which may be the container lid 512 of Fig. 5) is immediately below the gripping device 604 and covered/supported by the container 806 which it is covering - the lid 808 is on the container 806. Furthermore locking members 810 (which may be the locking members the locking members 708 of Fig. 7) are in their respective retracted positions and do not lock the lid 808 to the locking mechanism/gripping device 804.

Fig. 9 is a cut-away perspective view of robot 802 of Fig. 8 but in a different configuration. In the configuration of Fig. 9, the locking members 810 have been rotated to move to their respective projecting positions and thus lock the lid 808 to the locking mechanism/gripping device 804. As can be seen in Fig. 9, each locking member comprises a lip or projection 812 configured to engage with a respective corresponding feature (such as the lip or projection 518 of the recess) of the container lid 512.

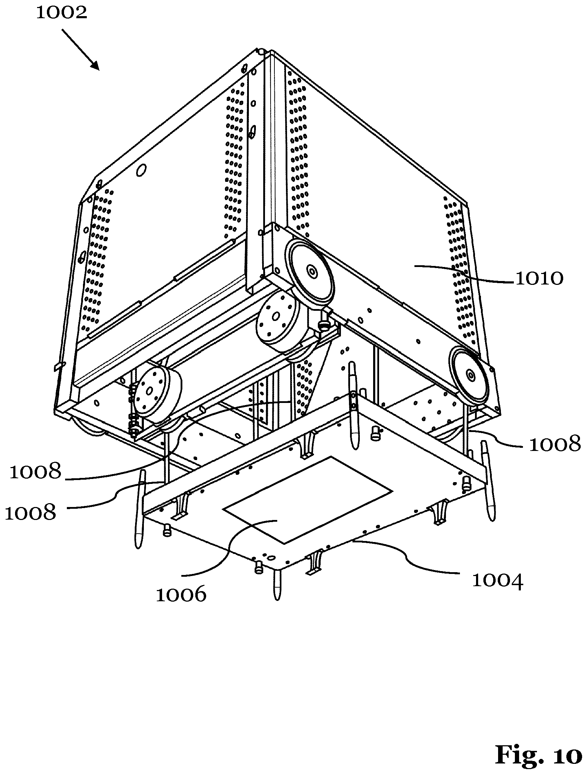

Whereas Fig. 8 and Fig. 9 show the gripping device and locking mechanism when employed with a 'cantilever' type of robot, the gripping device and locking mechanism may equally be employed with an 'internal cavity' robot and Fig. 10 is a perspective view of robot 1002 showing, from below, its gripping device 1004 and a locking mechanism 1006 which may be the same as described above in relation to Fig. 8 and Fig. 9. Shown also in Fig. 10 are the bands 108 for raising and lowering the gripper 1004 relative to a body portion of the robot 1010

Although the above has been described with reference to a locking mechanism comprising one or more locking members arranged for rotatable engagement with a lid, other mechanisms suitable for locking a lid to the gripping device may instead be employed including, but not limited to linear actuators - such as solenoids arranged in one example to move a pin into a hole in a lid, electromagnetic locks arranged to magnetically hold onto the lid, and suction mechanisms for holding the lid to the gripping device by suction.

### Operation of the robot, gripping device and locking mechanism

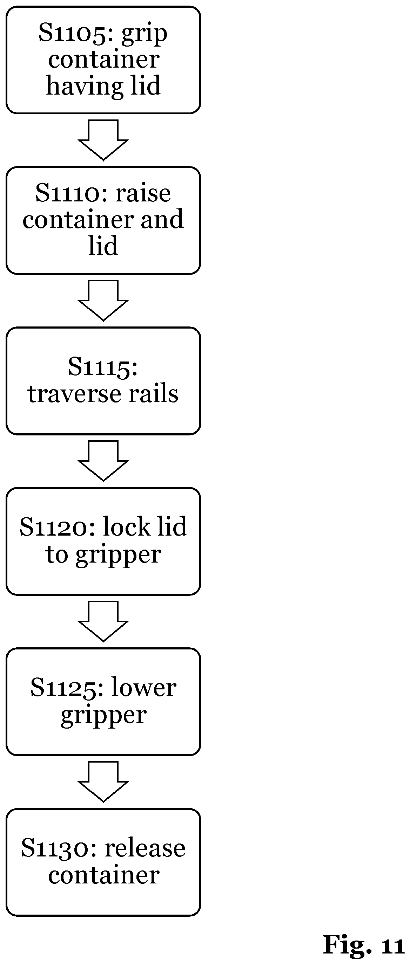

Fig. 11 shows a flow chart of method steps that may be performed according to the present disclosure. At step S1105, a robot grips a container being covered by a lid; as one example, the container and lid may be those described with reference to Fig. 5. In order to be able to grip the container, the robot may first ride upon the grid of rails to above a 'retrieval' location so that the gripping device is located vertically above the container before then lowering the gripping device down to the container. At step S1110, the robot raises the gripper and consequently also the lid. At step S1115, the robot traverses the rails to above a 'drop off' (or 'port') location. At step S1120, and whilst the container is supporting and covered by the container lid, the locking mechanism is locked onto the container lid so that the container lid becomes locked to the locking mechanism. This may be achieved by moving one or more locking members of the locking mechanism from respective retracted to respective projecting positions. As holding of the container by the gripping device locates the lid carried by the container immediately below the gripping device, the locking members are able to engage with the lid to perform the locking action. At step S1125, the gripping device is lowered and, as the gripping device grips the container and the locking mechanism locks the lid to the gripping device, both the container and the lid are consequently also lowered. At step S1130, the gripping device releases the container but, as the locking mechanism locks the lid to the gripping device, the lid is retained by the gripping device - in effect, the lid has been 'taken off.

Although the flow chart of Fig. 11 illustrates one approach by which the apparatus described herein may be employed, it is far from the only method and, within the bounds of common sense, any or all of the steps of the method of Fig. 11 bar step S1120 may be omitted and/or the steps may be performed in different orders. For example step S1120 could be performed on its own, before step S1105 or between or during: steps S1105 and S1110, steps S1110 and S1115, or steps S1125 and S1130.

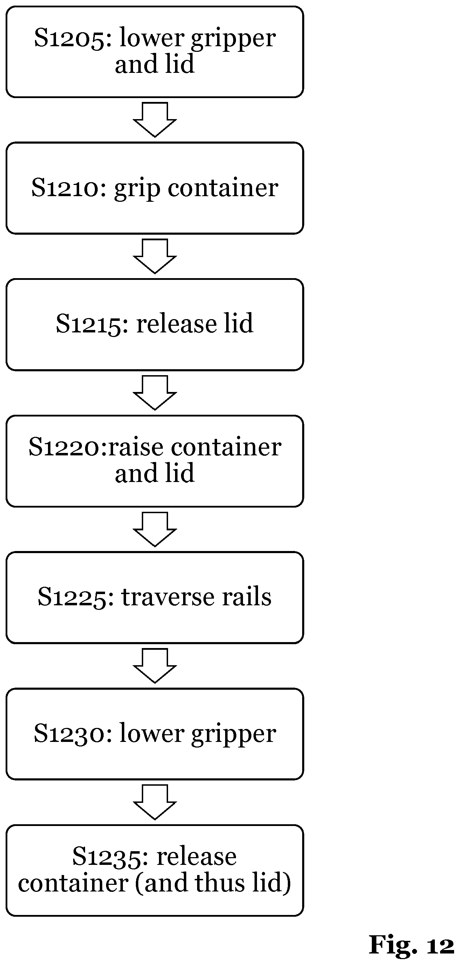

Fig. 12 shows a flow chart of method steps that may be performed according to the present disclosure. At step S1205, a robot with a gripper that is already locked to a lid but which does not grip a container is lowered towards a container that is not covered by a lid. As a precursor, the robot may first ride upon the grid of rails to above a 'collection' (or port) location wherein the gripping device is located vertically above the container before then lowering the gripping device down to the container in step S1205. At step S1210, the gripper grips onto the container before, at step S1215, the locking mechanism is used to release the lid so that the lid covers and is supported by the container - in effect the lid is 'put on' the container. This may be achieved by moving one or more locking members of the locking mechanism from respective projecting to respective retracted positions. At step S1220, the robot raises the gripper and thus also both the lid and the container. At step S1225, the robot traverses the rails to above a 'storage' location. At step S1230, the gripper is lowered to place the now lidded container in the storage location before at step S1235 the gripper releases the container and thus also the lid.

Although the flow chart of Fig. 12 illustrates one approach by which the apparatus described herein may be employed, it is far from the only method and, within the bounds of common sense, any or all of the steps of the method of Fig. 12 bar step S1215 may be omitted and/or the steps may be performed in different orders. For example, step S1215 could be performed on its own, before step S1210 or between or during: steps S1220 and S1225, steps S1225 and S1230, or steps S1230 and S1235.

Although Fig. 11 and Fig. 12 have been described with reference to both a lid and a container, the container need not be present and the approaches described herein may be employed to pick up, transport, and/or release a lid for a container in the absence of a container - as may occur if one or more such lids need on their own to be transported/stored and/or retrieved.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robot comprising a body portion and a gripping device having a locking mechanism,
the robot being arranged to ride on a grid of rails and to raise and lower the gripping device relative to the body portion,
the gripping device being arranged to releasably grip a container,
the locking mechanism being arranged to releasably lock onto a container lid.

2. The robot of claim 1, wherein the locking mechanism is arranged to lock onto the container lid whilst the gripping device is gripping the container and the container is supporting and covered by the container lid.

3. The robot of any preceding claim, wherein the locking mechanism is arranged to release the container lid whilst the gripping device is gripping the container so that the container lid covers and is supported by the container.

4. The robot of any preceding claim, wherein the locking mechanism comprises one or more locking members each arranged to move from a respective retracted position to a respective projecting position such that, when the container lid is immediately below the gripping device and the one or more locking members are each moved from their respective retracted position to their respective projecting position, the container lid becomes locked to the locking mechanism.

5. The robot of claim 4, wherein the one or more locking members are each arranged to move from their respective projecting position to their respective retracted position such that, when the container lid is locked to the locking mechanism and the one or more locking members are each moved from their respective projecting position to their respective retracted position, the container lid is released by the locking mechanism.

6. The robot of claim 4 or 5, wherein each of the one or more locking members is arranged to rotate about a respective axis so as to move between its respective retracted and projecting positions.

7. The robot of any of claims 4 to 6 further comprising one or more motors or actuators arranged to move the one or more locking members between their respective retracted and projecting positions.

8. The robot of any of claims 4 to 7, wherein each of the one or more locking members comprises a lip or projection configured to engage with a respective corresponding feature of the container lid.

9. A method of operating the robot of any preceding claim, the method comprising using the locking mechanism to release a container lid that had been locked to the gripping device by the locking mechanism.

10. The method of claim 9, wherein the locking mechanism is used to release the container whilst the gripping device grips a container.

11. A method of operating the robot of any of claims 1 to 8, the method comprising using the locking mechanism to lock a container lid to the gripping device.

12. The method of claim 11, wherein the locking mechanism is used to lock the container lid to the gripping device whilst the gripping device grips a container.

13. The method of claim 12 further comprising releasing the container whilst the container lid is locked to the gripping device.

14. The method of any of claims 9 to 12, further comprising raising and/or lowering the gripping device relative to the body portion.

15. A computer readable medium carrying computer-executable instructions which, when executed by one or more processors, cause the method of any of claims 9 to 14 to be carried out.
